# EUROPÄISCHE PATENTSCHRIFT

(11) **EP 0 513 593 B1**
(45) Veröffentlichungstag und Bekanntmachung des Hinweises auf die Patenterteilung: **02.11.1995**
(21) Anmeldenummer: 92107357.3
(22) Anmeldetag: 30.04.1992
(51) Int. Cl.: B29C 47/50

(54) **Vorrichtung zur Extrusion von Kunststoff- und Kautschukmischungen**
Device for the extrusion of plastic and rubber compounds
Dispositif pour l'extrusion de mélanges matières plastiques et caoutchouc

(30) Priorität: 10.05.1991 DE 4115246
(43) Veröffentlichungstag der Anmeldung: 19.11.1992
(73) Patentinhaber: PAUL TROESTER MASCHINENFABRIK, D-30519 Hannover (DE)
(72) Erfinder: Gohlisch, Hans Joachim, Dipl.-Ing., W-3000 Hannover 81 (DE); Baumgarten, Wilfried, Dipl.-Ing., W-3017 Pattensen (DE)
(74) Vertreter: Junius, Walther, Dr.

(56) Entgegenhaltungen:
- DE-A- 3 004 918
- DE-B- 1 030 010
- DE-U- 7 619 647
- FR-A- 1 150 253
- US-A- 1 595 470
- US-A- 2 692 405
- US-A- 3 090 992
- US-A- 4 171 193
- US-A- 4 642 040

## Beschreibung

Die Erfindung betrifft eine Vorrichtung zur Extrusion von Kunststoff- und/oder Kautschukmischungen, bestehend aus mindestens einem Schneckenextruder, einer diesem nachgeschalteten Zahnradpumpe und einem Spritzkopf, bei dem die Achsen (16) der Zahnräder (7,8) und die Achse (17) der Schnecke (3) parallel oder genähert parallel zueinander angeordnet sind.

Eine derartige Vorrichtung ist aus der FR-A-11 50 253 Fig. 5 bekannt geworden und dient zur Herstellung von Kunststoff-Folien. Die hier u.a. gezeigte Ausführung, bei der die Achsen der Zahnräder der Zahnradpumpe parallel zur Verlängerung der Achse der Schnecke angeordnet sind und bei der ein vor den Zahnrädern der Pumpe liegender Verteilungsraum eine axiale Fortsetzung des Zylinderraums des Extruders ist, ist eine ungewöhnliche Ausführung. Meistens werden Extruder-Zahnradpumpen-Kombinationen in der Weise gebaut, daß die Achsen der Zahnräder senkrecht zur Achsrichtung der Schnecke verlaufen (FR-A-11 50 253 Fig. 1 und 2, US-A-46 42 040, US-A-26 92 405). Alle diese Vorrichtungen dienen der Verarbeitung von Kunststoffmischungen, für Kautschukmischungen sind sie nicht einsetzbar.

Eine derartige Vorrichtung ist auch aus der DE-OS 27 00 003 bekannt geworden. Diese bekannte Vorrichtung dient auch zur Herstellung von Strangpreßprofilen aus Kunststoff. In dem Schneckenextruder dieser Vorrichtung wird Kunststoff aufgeschmolzen, dann durch einen Strainer geführt, um im aufgeschmolzenen Kunststoff vorhandene Fremdpartikel am Weiterfluß zu hindern, sodann wird der aufgeschmolzene und gestrainerte Kunststoff einer Zahnradpumpe zugeführt, die dem aufgeschmolzenen Kunststoff den erforderlichen Druck gibt, um in einem an den Ausgang der Zahnradpumpe angeschlossenen Spritzkopf zu einem Profil extrudiert zu werden. Der Vorteil einer Verwendung von Zahnradpumpen in einer Extrusionsanlage besteht darin, daß ein sehr gleichmäßiger Druck für die Extrusion aus dem Spritzkopf erzielt wird. Ein weiterer Vorteil der Zahnradpumpe in einer solchen Extrusionsanlage ist der, daß die Schnecke des Extruders kürzer als üblich ausgeführt werden kann, weil die Schnecke nur noch dem Aufschließen des Kunststoffes zu einer homogenen niedrig viskosen Masse zu dienen hat und nicht mehr den für die Extrusion aus dem Spritzkopf erforderlichen Druck aufzubauen braucht. Die Extrusionsanlage kann daher kürzer als ein üblicher Schneckenextruder gebaut werden, dessen Schnecke nicht nur die Aufschließarbeit, sondern auch die Arbeit des Aufbaues des Extrusionsdruckes zu bewältigen hat. Dieser Vorteil ist allerdings bei der DE-OS 27 00 003 nicht realisiert, hier sind vielmehr die Bauteile in einer geraden Produktionslinie weit auseinander stehend angeordnet, so daß ein erheblicher Bedarf an Bauraum besteht.

Bei dieser bekannten Extrusionsanlage sind die Achsen der Zahnräder der Zahnradpumpe senkrecht (und versetzt) zur Achse der Schnecke des Extruders angeordnet. Diese Anordnung ist auch sonst bei aus Schneckenextruder und Zahnradpumpe bestehenden Extrusionsanlagen für Kunststoffe üblich.

Solche aus Schneckenextruder und Zahnradpumpe bestehende Extrusionsanlagen werden bisher für die Verarbeitung von Kautschukmischungen nicht eingesetzt. Im Schneckenextruder plastifizierte Kautschukmischungen weisen ein anderes molekulares Gefüge als aufgeschmolzene Kunststoffe auf. Sie verschleißen Zahnradpumpen wegen ihrer Abrasivität, auch sind Brüche aufgetreten.

Neuere eigene Erkenntnisse führten diese Mängel darauf zurück, daß als Strang aus dem Schneckenextruder in die Zahnradpumpe eingeführte plastifizierte Kautschukmischungen durch ihre Molekülausrichtungen zu den Schäden an den Zahnradpumpen führten. Diese Erkenntnisse konnten die an den Zahnradpumpen auftretenden Schäden dadurch vermeiden, daß die Zahnradpumpe unmittelbar hinter der Schneckenspitze angeordnet wurde, so daß der Zahnradpumpe die direkt zuvor plastifizierte, noch nicht zu einem Strang ausgeformte Kautschukmischung zugeführt wurde. Diese Anordnung führte auch zu einer sehr kurzen Bauform der Extrusionsanlage.

Es ist ein Ziel der vorliegenden Erfindung, die Zahnräder der Zahnradpumpe dicht an das Ende der Schnecke des Extruders heranzubringen, um bei der Verarbeitung von Kautschukmischungen die im Extruder plastifizierte und in einer ungeordneten Bewegung befindliche Masse auf möglichst kurzem Wege den Zahnrädern der Zahnradpumpe zuzuführen.

Ein anderes Ziel der vorliegenden Erfindung ist es, den Mischeffekt für die extrudierte Masse beim Durchlauf durch die Extruder-Zahnradpumpen-Kombination zu verbessern und die im Extruder gebildeten radialen Massetemperaturdifferenzen und andere Ungleichheiten auszugleichen.

Ein weiteres Ziel der vorliegenden Erfindung ist es, den Bauraum von Extrusionsanlagen noch weiter zu verringern. Insbesondere bei der Verwendung von Querspritzköpfen, wie sie zur Ummantelung von Stäben, Schläuchen, Drähten und Kabeln zum Einsatz kommen, besteht ein erheblicher Bedarf an Bauraum bei den Extrusionsanlagen, die lediglich mit Schneckenextrudern und nicht mit Schneckenextruder-Zahnradpumpen-Kombinationen arbeiten. Bei der Verwendung solcher Querspritzköpfe steht der Schneckenextruder mit der Schneckenachse quer oder schräg zur Achse des mit dem Extrudat zu ummantelnden Gegenstandes. Sollen nun in einem Querspritzkopf zwei Ummantelungen gleichzeitig vorgenommen werden, so stehen beide Extruder mit ihrer Schneckenachse quer oder schräg zur Achse des Querspritzkopfes oder auf zwei gegenüberliegenden Seiten des Querspritzkopfes. Der hierfür erforderliche erhebliche Bauraum stellt ein Problem für die Anforderungen an die Fabrikationsgebäude dar.

Die vorliegende Erfindung vermeidet die Nachteile des Standes der Technik. Es ist die Aufgabe der vorliegenden Erfindung, eine aus Schneckenextruder und Zahnradpumpe bestehende Extrusionsanlage so zu gestalten, daß sie problemlos auch schwierige Kautschukmischungen verarbeiten kann und wenig Bauraum für ihre Aufstellung benötigt.

Es gibt zwei Möglichkeiten zur Lösung dieser Aufgabe:
Die eine Möglichkeit besteht darin, daß das Gehäuse (6) der Zahnradpumpe (in Radialrichtung gesehen) seitlich einen Hohlraum für die Aufnahme des Endes der Extruderschnecke (3) aufweist, daß die Schnecke (3) des Extruders in den Hohlraum (22) hineinragt, der stirnseitig durch die Gehäusewand (9) verschlossen ist, daß der Hohlraum (22) in einer seitlichen Öffnung endet, und daß das Gehäuse (6) der Zahnradpumpe an einem an der Stirnseite des Zylinders (1) angeordneten Flansch (23) befestigt ist. Die andere Möglichkeit besteht darin, daß der Extruderzylinder stirnseitig durch eine Gehäusewand (9) verschlossen ist, daß der Extruderzylinder (1) und/oder die Zylinderbuchse (2) am Ende mindestens einen Austrittsschlitz (10) im Umfang aufweist, und daß das Gehäuse (6) der Zahnradpumpe am Ort des Extruderaustrittsschlitzes (10) mit ihrer Eingangsöffnung am Extruderzylinder (1) angebracht ist.

Durch diese Anordnung der Achsen der Zahnräder lassen sich die Zahnräder sehr dicht neben der Schnecke oder dem Schneckenende des Extruders anordnen, so daß die in ungeordneter Bewegung befindliche zu extrudierende Masse in diesem Zustand an die Zahnradpumpe übergeben werden kann. Das führt zu einer problemlosen Verarbeitung auch schwieriger Kautschukmischungen. Gleichzeitig wird aber auch der Bedarf an Bauraum hierdurch geringer, insbesondere wenn die Ausformung der aufgeschlossenen bzw. plastifizierten Massen in Querspritzköpfen erfolgt. Denn bei dieser Anordnung können in einfacher Weise die Achsen der Schnecke, der Zahnräder und des Querspritzkopfes sowie eventuell durch den Querspritzkopf geführter, vom Extrudat zu ummantelnder Gegenstände parallel zueinander angeordnet werden. Durch diese beiden Möglichkeiten ist eine besonders dichte Anordnung der Zahnräder zur Schnecke des Extruders an deren Ende in einfacher und wirkungsvoller Weise realisiert.

Vorteilhaft ist es, wenn die Zahnräder der Zahnradpumpe eine ungleiche Zähnezahl aufweisen. Hierdurch wird eine weitere Mischwirkung der Extrusionsanlage erzielt.

Vorteilhaft kann es auch sein, daß an den Ausgang der Zahnradpumpe eine Homogenisiervorrichtung mit rotierendem Scherdorn angeschlossen ist, dessen Achse parallel oder genähert parallel zu den Achsen der Zahnräder und der Extruderschnecke verläuft. Auch durch diese Anordnung wird der Bauraumbedarf gegenüber herkömmlichen Anlagen verringert.

Der gleiche Erfolg wird erreicht, wenn an der Ausgangsseite der Zahnradpumpe ein Querspritzkopf angeordnet ist, dessen Achse parallel zu den Achsen der Zahnräder und der Achse der Extruderschnecke verläuft.

Bei der Anwendung eines solchen Querspritzkopfes ist es insbesondere vorteilhaft, wenn eine weitere, aus Schneckenextruder und Zahnradpumpe bestehende Extrusionsanlage an den Querspritzkopf angebaut ist, wobei die Achsen der Schnecken, der Zahnräder und des Querspritzkopfes parallel zueinander verlaufen.

Es ist vorteilhaft, wenn die Extruderschnecke in ihrem Endbereich eine vergrößerte Gangzahl aufweist.

Wenn die Extrusionsanlage der vorliegenden Erfindung das Extrudat nicht mehr über die Schneckenspitze hinaus fördert, sondern im Bereich des Endes der Schnecke radial zur Schneckenachse austreten läßt, kann es dazu kommen, daß sich Extrudat an der Stirnseite des Schneckenextruders unbewegt aufhält und hier zu Schäden, z.B. Abbau der Moleküle, Anvernetzungen oder Anvulkanisationen führt. Dieses läßt sich dadurch vermeiden, daß ein sich von der Schneckenspitze um mindestens zwei Schneckengänge entgegen der Förderrichtung der Schnecke erstreckender Bypaßkanal im Schneckenextruder angeordnet ist, oder wenn in der Stirnseite ein radialer Kanal z.B. in Form einer Rille vorgesehen ist, der sich bis zur Zahnradpumpe erstreckt.

Eine weitere Möglichkeit besteht darin, daß der Schnekkenkern am Schneckenende stärker wird und vorzugsweise im Bereich der Austrittsöffnung konisch gestaltet ist.

In vielen Fällen wird es zweckmäßig sein, am Ende der Extruderschnecke eine Misch- und/oder Scherzone anzuordnen, welche auch mit dem am Schneckenende stärker werdenden Schneckenkern als konstruktive Einheit gestaltet werden kann.

Das Wesen der Erfindung ist nachstehend anhand von in der Zeichnung schematisch dargestellten Ausführungsbeispielen näher erläutert. Es zeigen:

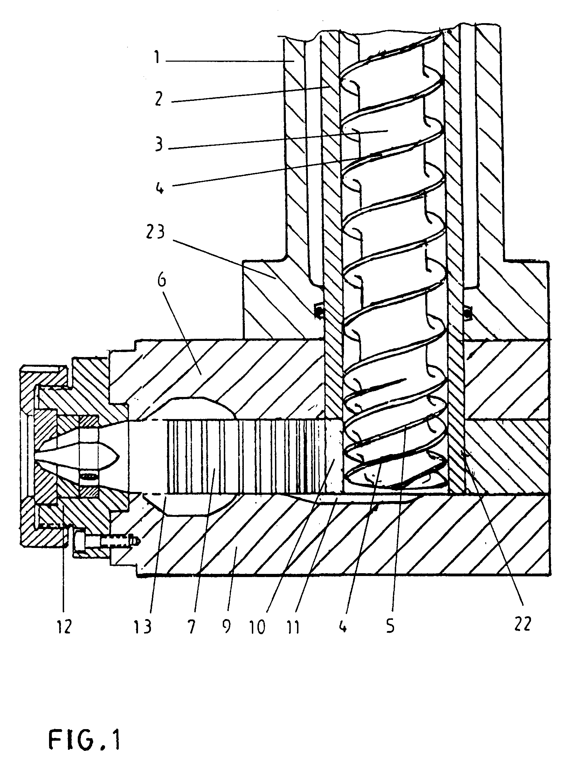

- Fig. 1: einen Längsschnitt durch eine Extrusionsanlage,

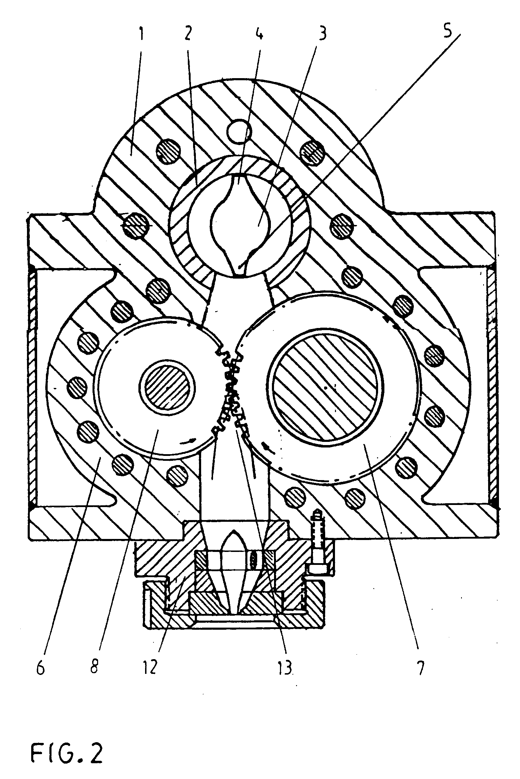

- Fig. 2: einen Querschnitt durch den Schneckenextruder, die Zahnradpumpe und den Spritzkopf dieser Extrusionsanlage,
- Fig. 3: eine Extrusionsanlage mit Querspritzkopf im Längsschnitt,
- Fig. 4: im Querschnitt,
- Fig. 5: einen Längsschnitt durch eine Extrusionsanlage mit zwei Schneckenextrudern und einem Querspritzkopf,
- Fig. 6: eine Extrusionsanlage mit Bypaß im Schnekkenextruder,
- Fig. 7: einen Querschnitt durch eine Extrusionsanlage mit Durchtrittsöffnungen im Zylinder des Schneckenextruders.

Der Zylinder 1 des Extruders ist innen mit der Zylinderbuchse 2 versehen, in welcher die Extruderschnecke 3 rotierend das Extrudat aufschließt bzw. plastifiziert. Die Extruderschnecke 3 ist über den Hauptteil ihrer Länge ein- oder zweigängig ausgeführt, weist aber im Endbereich weitere Schneckengänge 5 auf. Die Zylinderbuchse 2 und die Extruderschnecke 3 erstrecken sich bis in das Gehäuse 6 der Zahnradpumpe, in welchem die Zahnräder 7,8 rotierend von einem nicht dargestellten Motor angetrieben sind. Die Gehäusewandung 9 verschließt stirnseitig die Zylinderbuchse 2, das Extrudat tritt durch eine Durchtrittsöffnung 10 aus der Zylinderbuchse in die Zahnradpumpe 6 ein. Um einen geeigneten Abfluß des Extrudates aus dem Bereich des Schneckenendes zu erreichen, ist es zweckmäßig, wenn in der Gehäusewand 9 ein Kanal 11 in Form einer Rille vorgesehen ist, welcher sich vom Bereich des Schneckenendes bis zum Zahneintritt erstreckt.

Ausgangsseitig ist an das Gehäuse 6 der Zahnradpumpe der Spritzkopf 12 angebracht. Um einen geeigneten Abfluß derjenigen Teile des Extrudates zu erreichen, die im Bereich der ineinander greifenden Zähne der Zahnräder 7 und 8 zu den Stirnseiten der Zahnräder gequetscht werden, ist es zweckmäßig, beidseitig der Stirnseiten der Zahnräder 7 und 8 vom Bereich des Ineinandergreifens der Zähne in Richtung auf den Ausgang der Zahnradpumpe Kanäle 13 vorzusehen.

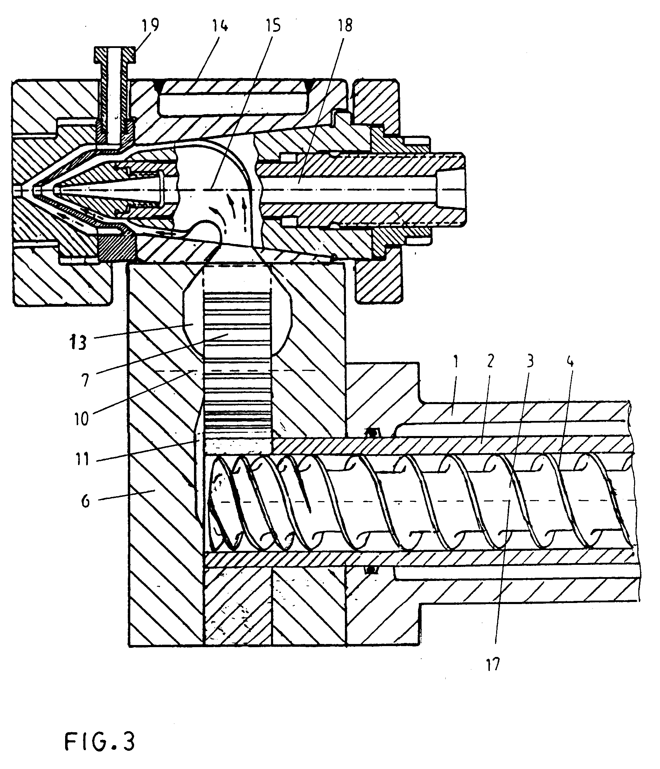

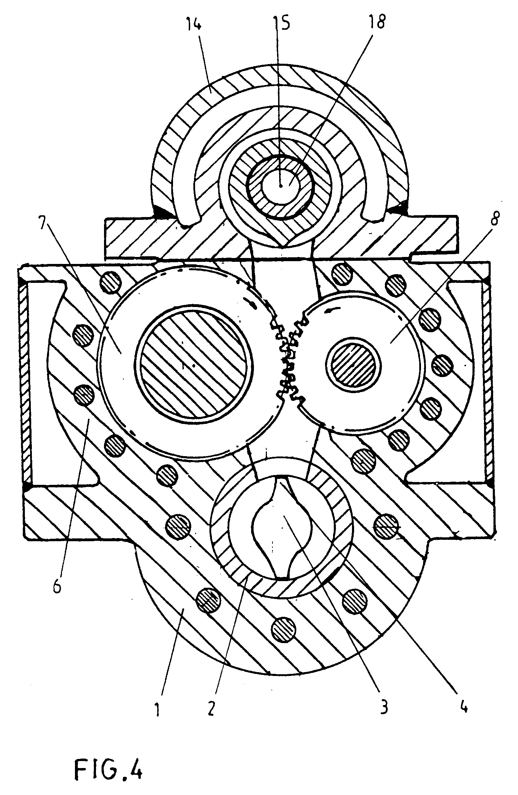

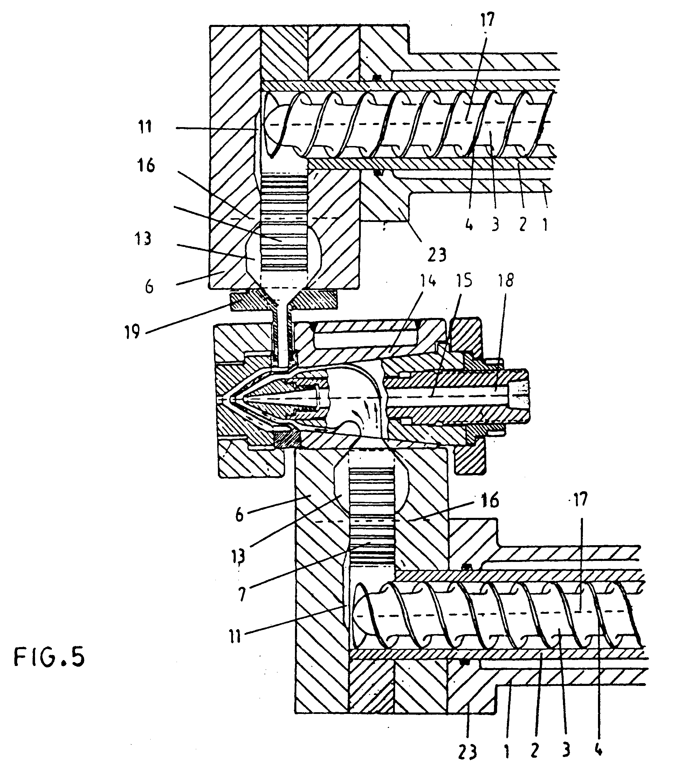

Wie das Ausführungsbeispiel der Fig. 3 und 4 zeigt, kann als Spritzkopf auch ein Querspritzkopf 14 angewendet werden, dessen Achse 15 parallel zu den Achsen 16 der Zahnräder und parallel zu der Achse 17 der Extruderschnecke 3 angeordnet ist. Dieser Querspritzkopf 14 weist zentrisch eine durchgehende Öffnung 18 für die Durchführung eines zu ummantelnden Gegenstandes auf. Weiter weist dieser Querspritzkopf einen Anschlußstutzen 19 für eine weitere Extrusionsanlage auf, welche in Fig. 5 dargestellt ist. Auch diese Extrusionsanlage kann aus der Kombination eines Schneckenextruders mit einer Zahnradpumpe bestehen, wobei beide Extruderschnecken 3 parallel zueinander und parallel zu den Achsen 16 der Zahnräder 7,8 und parallel zur Achse 15 des Querspritzkopfes 14 verlaufen.

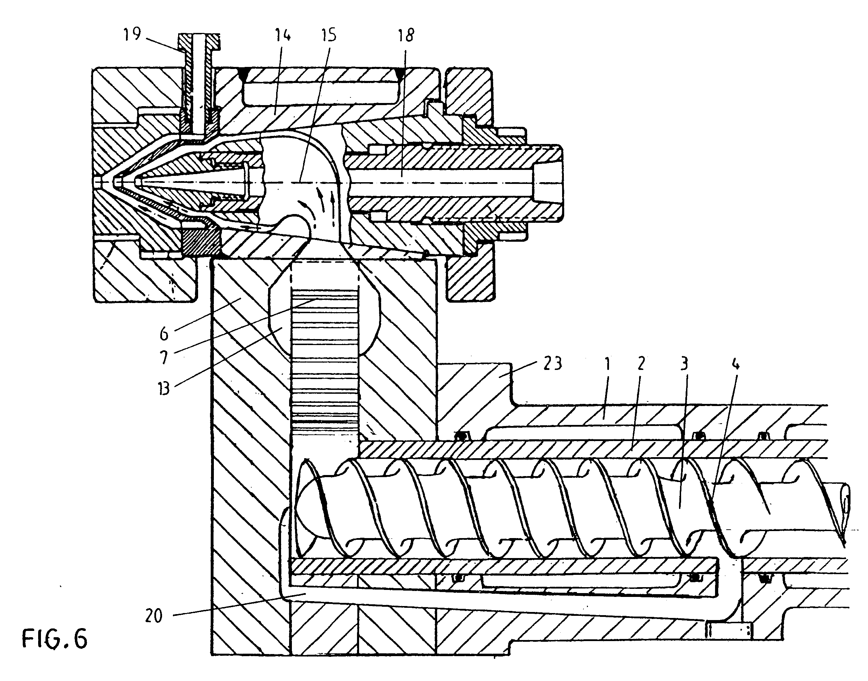

Um stirnseitige Extrudatschäden, z.B. Anvulkanisationen zu verhindern, kann ein Bypaß 20 am Schneckenextruder angeordnet sein, welcher von der Stirnseite des zylindrischen Innenraumes des Extruders hier befindliches Extrudat um zwei oder mehr Schneckengänge zurückfördert, wie Fig. 6 es zeigt.

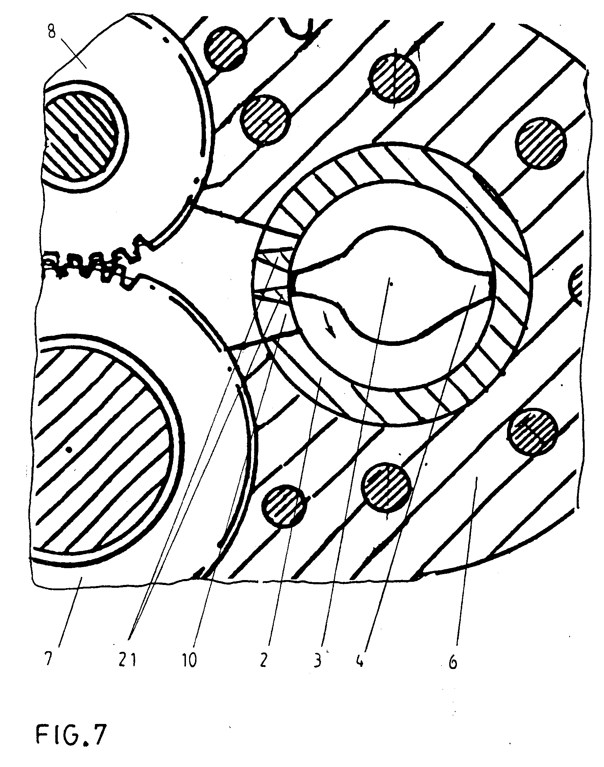

Im Ausführungsbeispiel der Fig. 7 weist die Zylinderbuchse 2 mehrere Durchtrittsöffnungen 10 auf, was den Vorteil hat, daß das Extrudat beim Übergang aus der Zylinderbuchse in den Eingang der Zahnradpumpe einem weiteren Mischeffekt unterzogen wird. Dieser kann durch besondere Gestaltungen der Durchtrittsöffnungen oder von zwischen den Durchtrittsöffnungen 10 befindlichen Körpern 21 noch intensiviert werden. Die Anordnung, Form und Größe der Durchtrittsöffnungen kann Einfluß auf den Mischeffekt haben.

### Liste der Bezugszeichen:

- 1: Zylinder
- 2: Zylinderbuchse
- 3: Extruderschnecke
- 4: Schneckengang
- 5: zweiter Schneckengang
- 6: Gehäuse der Zahnradpumpe
- 7: Zahnrad
- 8: Zahnrad
- 9: Gehäusewand
- 10: Durchtrittsöffnungen
- 11: Kanal
- 12: Spritzkopf
- 13: Kanal
- 14: Querspritzkopf
- 15: Achse des Querspritzkopfes
- 16: Zahnradachse
- 17: Achse der Schnecke
- 18: zentrale Durchgangsöffnung
- 19: Anschlußstutzen für 2. Extruder
- 20: Bypaß
- 21: Stege in der Buchse
- 22: Hohlraum
- 23: Flansch

## Patentansprüche

1. Vorrichtung zur Extrusion von Kunststoff- und/oder Kautschukmischungen,
bestehend aus mindestens einem Schneckenextruder, einer diesem nachgeschalteten Zahnradpumpe und einem Spritzkopf, bei der die Achsen (16) der Zahnräder (7,8) und die Achse (17) der Schnecke (3) parallel oder genähert parallel zueinander angeordnet sind,
dadurch gekennzeichnet,
daß das Gehäuse (6) der Zahnradpumpe, in Radialrichtung gesehen, seitlich einen Hohlraum für die Aufnahme des Endes der Extruderschnecke (3) aufweist,
daß die Schnecke (3) des Extruders in den Hohlraum (22) hineinragt, der stirnseitig durch die Gehäusewand (9) verschlossen ist,
daß der Hohlraum (22) in einer seitlichen Öffnung endet,
und daß das Gehäuse (6) der Zahnradpumpe an einem an der Stirnseite des Zylinders (1) angeordneten Flansch (23) befestigt ist.

2. Vorrichtung zur Extrusion von Kunststoff- und/oder Kautschukmischungen,
bestehend aus mindestens einem Schneckenextruder, einer diesem nachgeschalteten Zahnradpumpe und einem Spritzkopf, bei der die Achsen (16) der Zahnräder (7,8) und die Achse (17) der Schnecke (3) parallel oder genähert parallel zueinander angeordnet sind,
dadurch gekennzeichnet,
daß der Extruderzylinder stirnseitig durch eine Gehäusewand (9) verschlossen ist,
daß der Extruderzylinder (1) und/oder die Zylinderbuchse (2) am Ende mindestens einen Austrittsschlitz (10) im Umfang aufweist,
und daß das Gehäuse (6) der Zahnradpumpe am Ort des Extruderaustrittsschlitzes (10) mit ihrer Eingangsöffnung am Extruderzylinder (1) angebracht ist.

3. Vorrichtung nach Anspruch 1 oder 2,
dadurch gekennzeichnet,
daß die Zahnräder (7,8) der Zahnradpumpe ungleiche Zähnezahl aufweisen.

4. Vorrichtung nach Anspruch 1 oder 2,
dadurch gekennzeichnet,
daß an den Ausgang der Zahnradpumpe eine Homogenisiervorrichtung mit rotierendem Scherdorn angeschlossen ist, dessen Achse parallel oder genähert parallel zu den Achsen (16) der Zahnräder (7,8) und der Extruderschnecke (3) verläuft.

5. Vorrichtung nach Anspruch 1 oder 2,
dadurch gekennzeichnet,
daß an der Ausgangsseite der Zahnradpumpe ein Querspritzkopf (14) angeordnet ist, dessen Achse (15) parallel oder annähernd parallel zu den Achsen (16) der Zahnräder (7,8) und der Achse (17) der Extruderschnecke (3) verläuft.

6. Vorrichtung nach Anspruch 5,
dadurch gekennzeichnet,
daß eine weitere aus Schneckenextruder und Zahnradpumpe bestehende Extrusionsanlage an den Querspritzkopf (14) angebracht ist,
wobei die Achsen der Schnecken (3), der Zahnräder (7,8) und des Querspritzkopfes (14) parallel zueinander verlaufen.

7. Vorrichtung nach Anspruch 1 oder 2,
dadurch gekennzeichnet,
daß die Extruderschnecke (3) in ihrem Endbereich eine vergrößerte Gangzahl aufweist.

8. Vorrichtung nach Anspruch 1 oder 2,
gekennzeichnet durch
einen sich von der Schneckenspitze um mindestens zwei Schneckengänge entgegen der Förderrichtung der Schnecke (3) erstreckenden Bypaßkanal (20) im Schneckenextruder.

9. Vorrichtung nach Anspruch 1 oder 2,
gekennzeichnet durch
einen sich von der Schneckenspitze radial in Richtung zur Zahnradpumpe erstreckenden Kanal (11) in der stirnseitigen Abschlußwand des Extruderzylinders.

10. Vorrichtung nach Anspruch 1 oder 2,
gekennzeichnet durch
einen am Schneckenende stärker werdenden Schnekkenkern, der vorzugsweise im Bereich der Austrittsöffnung konisch gestaltet ist.

11. Vorrichtung nach Anspruch 1 oder 2,
gekennzeichnet durch
die Anordnung einer Misch- und/oder Scherzone am Ende der Extruderschnecke.

## Claims

1. Device for the extrusion of plastic and/or rubber mixtures, consisting of at least one screw extruder, a gear pump connected after this and an extrusion head, wherein the axes (16) of the gears (7, 8) and the axis (17) of the screw (3) are disposed parallel or approximately parallel to one another, characterised in that, viewed in the radial direction, at the side the housing (6) of the gear pump exhibits a cavity for reception of the end of the extruder screw (3), in that the screw (3) of the extruder projects into the cavity (22) which is closed at the front end by the housing wall (9), in that the cavity (22) ends in a side opening, and in that the housing (6) of the gear pump is secured to a flange (23) disposed at the front side of the cylinder (1).

2. Device for the extrusion of plastic and/or rubber mixtures, consisting of at least one screw extruder, a gear pump connected after this and an extrusion head, wherein the axes (16) of the gears (7, 8) and the axis (17) of the screw (3) are disposed parallel or approximately parallel to one another, characterised in that at the front end the extruder cylinder is closed by a housing wall (9), in that the extruder cylinder (1) and/or the cylinder liner (2) exhibits at least one outlet slot (10) in the circumference at the end, and in that the housing (6) of the gear pump is attached to the extruder cylinder (1) by its inlet opening at the location of the extruder outlet slot (10).

3. Device according to claim 1 or 2, characterised in that the gears (7, 8) of the gear pump exhibit an unequal number of teeth.

4. Device according to claim 1 or 2, characterised in that a homogenising device with a rotating shear mandrel, the axis of which runs parallel or approximately parallel to the axes (16) of the gears (7, 8) and the extruder screw (3), is connected to the outlet of the gear pump.

5. Device according to claim 1 or 2, characterised in that a transverse extrusion head (14), the axis (15) of which runs parallel or approximately parallel to the axes (16) of the gears (7, 8) and the axis (17) of the extruder screw (3), is disposed on the outlet side of the gear pump.

6. Device according to claim 5, characterised in that a further extrusion system consisting of a screw extruder and gear pump is attached to the transverse extrusion head (14), the axes of the screws (3), the gears (7, 8) and the transverse extrusion head (14) running parallel to one another.

7. Device according to claim 1 or 2, characterised in that in its end area the extruder screw (3) exhibits an increased number of turns.

8. Device according to claim 1 or 2, characterised by a bypass passage (20) in the screw extruder extending from the tip of the screw by at least two screw turns counter to the direction of conveyance of the screw (3).

9. Device according to claim 1 or 2, characterised by a passage (11) in the front end wall of the extruder cylinder extending from the tip of the screw radially in the direction of the gear pump.

10. Device according to claim 1 or 2, characterised by a screw core which becomes thicker at the end of the screw and is preferably conical in shape in the area of the outlet opening.

11. Device according to claim 1 or 2, characterised by the arrangement of a mixing and/or shear zone at the end of the extruder screw.

## Revendications

1. Dispositif pour l'extrusion de mélanges de matières plastiques et/ou de caoutchouc,
composé d'au moins une extrudeuse à vis, d'une pompe a engrenage placée en aval de celle-ci et d'une tête d'injection, dans lequel les axes (16) des roues dentées (7, 8) et l'axe (17) de la vis (3) sont disposés parallèlement ou à peu près parallèlement entre eux,
caractérisé
en ce que le carter (6) de la pompe à engrenage présente latéralement (considéré dans la direction radiale) une cavité pour recevoir l'extrémité de la vis (3) de l'extrudeuse,
en ce que la vis (3) de l'extrudeuse pénètre dans la cavité (22) qui est fermée, sur le côté frontal, par la paroi (9) du carter,
en ce que la cavité (22) se termine dans une ouverture latérale
et en ce que le carter (6) de la pompe à engrenage est fixé à une bride (23) prévue au droit du côté frontal du cylindre (1).

2. Dispositif pour l'extrusion de mélanges de matières plastiques et/ou de caoutchouc,
composé d'au moins une extrudeuse à vis, d'une pompe a engrenage placée en aval de celle-ci et d'une tête d'injection, dans lequel les axes (16) des roues dentées (7, 8) et l'axe (17) de la vis (3) sont disposés parallèlement ou à peu près parallèlement entre eux,
caractérisé en ce que
le cylindre de l'extrudeuse est fermé, sur son côté frontal, par une paroi (9) du carter,
en ce que le cylindre (1) de l'extrudeuse et/ou la chemise (2) du cylindre présentent à l'extrémité au moins une fente de sortie (10) pratiquée dans sa circonférence
et en ce que le carter (6) de la pompe à engrenage est monté sur le cylindre (1) de l'extrudeuse avec son ouverture d'entrée à l'endroit de la fente de sortie (10) de l'extrudeuse.

3. Dispositif selon la revendication 1 ou 2,
caractérisé
en ce que les roues dentées (7, 8) de la pompe à engrenage présentent des nombres de dents différents.

4. Dispositif selon la revendication 1 ou 2,
caractérisé
en ce qu'à la sortie de la pompe à engrenage, est raccordé un dispositif d'homogénéisation possédant un mandrin de cisaillement tournant dont l'axe s'étend parallèlement ou à peu près parallèlement aux axes (16) des roues dentées (7, 8) et à la vis (3) de l'extrudeuse.

5. Dispositif selon la revendication 1 ou 2,
caractérisé
en ce qu'au côté de sortie de la pompe à engrenage, est agencée une tête d'injection d'équerre (14) dont l'axe (15) s'étend parallèlement ou à peu près parallèlement aux axes (16) des roues dentées (7, 8) et à l'axe (17) de la vis (3) de l'extrudeuse.

6. Dispositif selon la revendication 5,
caractérisé
en ce qu'une autre installation d'extrusion, composée d'une extrudeuse à vis et d'une pompe à engrenage, est montée sur la tête d'injection d'équerre (14),
les axes des vis (3), des roues dentées (7, 8) et de la tête d'extrusion d'équerre (14) s'étendent parallèlement entre eux.

7. Dispositif selon la revendication 1 ou 2,
caractérisé
en ce que la vis (3) de l'extrudeuse présente un nombre de filets augmenté dans sa région terminale.

8. Dispositif selon la revendication 1 ou 2,
caractérisé
par un canal de bypasse (20) formé dans l'extrudeuse à vis, qui s'étend à partir de la pointe de la vis, sur au moins deux filets de la vis en sens inverse du sens du transport de la vis (3).

9. Dispositif selon la revendication 1 ou 2,
caractérisé
par un canal (11) ménagé dans la paroi de fermeture du côté frontal du cylindre de l'extrudeuse, qui s'étend radialement à partir de la pointe de la vis et en direction de la pompe à engrenage.

10. Dispositif selon la revendication 1 ou 2,
caractérisé
par un noyau de vis qui grossit à l'extrémité de la vis et qui est de préférence de configuration conique dans la région de l'ouverture de sortie.

11. Dispositif selon la revendication 1 ou 2,
caractérisé
par l'agencement d'une zone de mélange et/ou de cisaillement à l'extrémité de la vis de l'extrudeuse.
